# EUROPÄISCHE PATENTANMELDUNG

(11) **EP 4 369 593 A1**
(43) Veröffentlichungstag der Anmeldung: **15.05.2024**
(21) Anmeldenummer: 22206521.1
(22) Anmeldetag: 10.11.2022
(51) Int. Cl.: H02P 27/06, H02J 3/01

(54) **KOMPENSATIONSVORRICHTUNG ZUR REDUZIERUNG VON EINER ODER MEHREREN OBERSCHWINGUNGEN IN EINER ELEKTRISCHEN MASCHINE**

(71) Anmelder: Siemens Aktiengesellschaft, 80333 München (DE)
(72) Erfinder: Balke, Benjamin, 10589 Berlin (DE); Centner, Matthias, 10555 Berlin (DE)
(74) Vertreter: Siemens Patent Attorneys

(57) **Zusammenfassung**

Die Erfindung betrifft eine Kompensationsvorrichtung (1) für eine elektrische Maschine (2). Zur Verbesserung eines elektrischen Antriebs wird vorgeschlagen, dass die Kompensationsvorrichtung (1) eine Energiequelle (3) aufweist, wobei die Energiequelle eingerichtet ist, in Abhängigkeit von Messwerten eines Sensors (4) zur Bestimmung von mindestens einer Oberschwingung ein elektrisches Signal, insbesondere eine Spannung oder einen Strom, zu erzeugen, das der Oberschwingung entgegenwirkt. Die Erfindung betrifft weiter einen elektrischen Antrieb (10), aufweisend eine derartige Kompensationsvorrichtung (1), eine elektrische Maschine (2) und einen Sensor zur Bestimmung von mindestens einer Oberschwingung an Anschlussklemmen (21) der elektrischen Maschine (2), wobei die Kompensationsvorrichtung (1) mit den Anschlussklemmen (21) der elektrischen Maschine (2) verbunden ist. Ferner betrifft die Erfindung ein Verfahren zur Steuerung oder Regelung einer derartigen Kompensationsvorrichtung (1) oder eines derartigen elektrischen Antriebs (10), wobei mindestens eine Oberschwingung an den Anschlussklemmen (21) der elektrischen Maschine (2) bestimmt wird, wobei mittels der Kompensationsvorrichtung (1) ein elektrisches Signal erzeugt wird, das der Oberschwingung an den Anschlussklemmen (21) der elektrischen Maschine (2) entgegenwirkt.

## Beschreibung

Die Erfindung betrifft eine Kompensationsvorrichtung für eine elektrische Maschine. Ferner betrifft die Erfindung einen elektrischen Antrieb mit einer derartigen Kompensationsvorrichtung und einer elektrischen Maschine. Die Erfindung betrifft weiter ein Verfahren zur Steuerung oder Regelung einer derartigen Kompensationsvorrichtung oder eines derartigen elektrischen Antriebs.

Das magnetische Feld in einer elektrischen Maschine weist neben der drehmomenterzeugenden Grundwelle oftmals zusätzliche Oberschwingungen, auch als Oberwellen bezeichnet, auf. Diese Oberschwingungen erzeugen unerwünschte Nebenwirkungen wie beispielsweise Verluste oder Kräfte, die Schwingungen anregen können. Diese Schwingungen erzeugen Luft- und/oder Körperschall, der auftragsspezifisch bestimmten Grenzwerten unterworfen ist. Die Einhaltung dieser Grenzwerte stellt eine zum Teil erhebliche technische Schwierigkeit dar.

Die elektrische Maschine wird oftmals durch einen Stromrichter mit elektrischer Energie versorgt. Dabei bildet der Stromrichter häufig des Stellglied, um die elektrische Maschine beispielsweise hinsichtlich Drehzahl oder Drehmoment zu steuern oder zu regeln. Dabei erzeugt der Stromrichter Oberschwingungen in seiner Ausgangsspannung und seinem Ausgangsstrom, die Oberwellen im magnetischen Feld verursachen. Motoren und Generatoren sind Beispiele für elektrische Maschinen.

Da eine exakte Vorherberechnung der aus teilweise parasitären Feldwellen resultierenden Schwingungs- und Geräuschpegel oftmals nur schwer möglich ist, sind im Nachhinein, also nach Auslegung und Herstellung der elektrischen Maschine bzw. des elektrischen Antriebs, nur aufwändige mechanische Abhilfemaßnahmen wie beispielsweise spezielle Dämpfungselemente möglich. Eine weitere Abhilfe stellt eine möglichst steife und damit schwere mechanische Konstruktion dar.

Der Erfindung liegt die Aufgabe zugrunde, einen elektrischen Antrieb zu verbessern.

Diese Aufgabe wird durch eine Kompensationsvorrichtung für eine elektrische Maschine gelöst, wobei die Kompensationsvorrichtung eine Energiequelle aufweist, wobei die Energiequelle eingerichtet ist, in Abhängigkeit von Messwerten eines Sensors zur Bestimmung von mindestens einer Oberschwingung ein elektrisches Signal, insbesondere eine Spannung oder einen Strom, zu erzeugen, das der Oberschwingung entgegenwirkt. Ferner wird diese Aufgabe durch einen elektrischen Antrieb aufweisend eine derartige Kompensationsvorrichtung, eine elektrische Maschine und einen Sensor zur Bestimmung von mindestens einer Oberschwingung, insbesondere einer Oberschwingung des Stroms oder der Spannung, an Anschlussklemmen der elektrischen Maschine gelöst, wobei die Kompensationsvorrichtung mit den Anschlussklemmen der elektrischen Maschine verbunden ist. Diese Aufgabe wird weiter durch ein Verfahren zur Steuerung oder Regelung einer derartigen Kompensationsvorrichtung oder eines derartigen elektrischen Antriebs gelöst, wobei mindestens eine Oberschwingung an den Anschlussklemmen der elektrischen Maschine bestimmt wird, wobei mittels der Kompensationsvorrichtung ein elektrisches Signal, insbesondere eine Spannung oder ein Strom, erzeugt wird, das der Oberschwingung an den Anschlussklemmen der elektrischen Maschine entgegenwirkt.

Weitere vorteilhafte Ausgestaltungen der Erfindung sind in den abhängigen Ansprüchen angegeben.

Der Erfindung liegt unter anderem die Erkenntnis zugrunde, dass sich die Situation der Oberschwingungen und die damit einhergehenden Verluste und Geräusche in einer elektrischen Maschine dadurch verbessern lässt, dass eine Kompensationsvorrichtung mit der elektrischen Maschine verbunden oder in den elektrischen Antrieb integriert wird. Dadurch können entstehende Oberschwingungen vermieden werden, indem die Ausbildung der Oberschwingung beispielsweise aufgrund einer Oberschwingung in der Spannung und/oder dem Strom an den Anschlussklemmen der elektrischen Maschine verhindert wird.

Dabei misst ein Sensor der Kompensationsvorrichtung die Oberschwingungen an den Anschlussklemmen der elektrischen Maschine. Dabei können Oberschwingungen des Stroms und/oder der Spannung an den Anschlussklemmen gemessen werden. Diese geben Aufschluss über die Oberschwingungen des magnetischen Feldes in der elektrischen Maschine, das nicht nur Verluste erzeugt, sondern auch Geräusche.

Es hat sich gezeigt, dass durch die Verringerung mindestens einer Oberschwingung von Strom und/oder Spannung sich auch die Verluste und gleichzeitige die Geräusche der elektrischen Maschine reduzieren lassen. Mittels der Kompensationsvorrichtung wird ein elektrisches Signal, beispielsweise eine Spannung oder ein Strom, in den elektrischen Antrieb eingekoppelt, die von der Phasenlage derart ausgerichtet ist, dass dieses Signal der mittels des Sensors gemessenen Oberschwingung entgegenwirkt.

Es hat sich darüber hinaus gezeigt, dass durch die gezielte Einprägung von einem Strom in Form einer Stromoberwelle mit definierter Phasenlage und Amplitude bzw. einer Spannung in Form einer Spannungsoberwelle mit definierter Phasenlage und Amplitude zusätzliche Kraftwellen angeregt bzw. erzeugt werden können. Die Phasenlage und Amplitude dieser zusätzlichen Kraftwellen wird so gesteuert oder geregelt, dass sie bereits vorhandenen Kraftwellen entgegenwirken, diese also kompensieren oder zumindest reduzieren. Besonders vorteilhaft ist dieses Vorgehen auf Kraftwellen mit einer Ordnungszahl 0.

Dabei hat es sich als vorteilhaft erwiesen, genau eine Oberschwingung mittels des Sensors zu bestimmen und diese durch das elektrische Signal zu kompensieren oder zumindest zu reduzieren. Dies erfordert nur einen geringen Stellaufwand und die Kompensationsvorrichtung kann besonders klein und effizient betrieben werden. Darüber hinaus hat sich gezeigt, dass sich mit nur einer Oberwelle sowohl die Verluste als auch das Geräuschverhalten zum Teil schon signifikant verbessern lassen. So kann auf die Kompensation bzw. Verringerung weiterer Oberschwingungen zugunsten einer kleinen und effizient betreibbaren Kompensationsvorrichtung verzichtet werden. Allerdings ist es auch möglich, mehrere Oberschwingungen zu bestimmen und mit Hilfe der Kompensationsvorrichtung zu beseitigen oder zu verringern. Dies bietet die Möglichkeit, auch besonders strenge Anforderungen an das Verlust- oder das Geräuschverhalten einer elektrischen Maschine oder eines gesamten elektrischen Antriebs zu erfüllen. Auch in diesem Fall kann die Kompensationsvorrichtung auf eine bestimmte Anzahl von Oberschwingungen einfach und kostengünstig ausgelegt werden. Darüber hinaus ist es möglich, Auslegungsreserven für die Kompensation weiterer Oberschwingungen zu nutzen.

Eine solche Kompensationsvorrichtung weist in vorteilhafter Weise eine Mikroprozessor-gesteuerte Elektronik auf, die das gewünschte elektrische Signal in der entsprechenden Signalstärke zur Verfügung stellt. Die Anordnung dieses Geräts erfolgt entweder in Reihenschaltung zu den Anschlussklemmen der elektrischen Maschine, so dass die Kompensationsvorrichtung als zusätzliche Spannungsquelle wirkt oder parallel zu den Anschlussklemmen der elektrischen Maschine, so dass die Kompensationsvorrichtung als Stromquelle arbeitet. Es bietet sich prinzipiell eine induktive Einkopplung des Signals an. Zur Entkopplung von der Grundschwingung bieten sich BandpassFilter an, ähnlich den in der Power-Line-Communication verwendeten.

Die Kompensationsvorrichtung bietet darüber hinaus den Vorteil, in bestehende elektrische Antriebe nachträglich integriert zu werden. Mit anderen Worten besitzt die Kompensationsvorrichtung die Eigenschaft einer leichten Nachrüstbarkeit.

Bei einer vorteilhaften Ausgestaltung der Erfindung weist die Kompensationsvorrichtung ein Filter, insbesondere ein Bandpassfilter, auf. Für die Einkopplung der Oberschwingung mit Hilfe des elektrischen Signals hat es sich als vorteilhaft erwiesen, wenn die Energiequelle für die Einkopplung nicht auch noch die Grundschwingung oder ggf. weitere Oberschwingungen aufbringen muss, um das elektrische Signal der Oberschwingung einzukoppeln. Die Notwendigkeit, die Grundschwingung aufzubringen ergibt sich teilweise dadurch, dass ein Austausch an Strömen mit der Grundschwingung verhindert werden soll. Dies ist auch durch ein Filter der Kompensationsvorrichtung möglich, welches die Ausbildung von Grundschwingungsströmen zwischen der Kompensationsvorrichtung und der elektrischen Maschine zuverlässig verhindert. Dies erhöht zum einen die Stellreserve der Kompensationsvorrichtung, da die Grundschwingung nicht von der Kompensationsvorrichtung aufgebracht wird. Zum anderen wird auch die Regelung einfacher, da dann nicht nur die Grundschwingung erzeugt wird, sondern auch phasenrichtig aufgeschaltet werden müsste. Durch die Verwendung eines Filters kann auf diese Maßnahmen verzichtet werden. Gleichzeitig reduzieren sich die Anforderungen an die elektrische Leistungsfähigkeit der elektrischen Komponenten der Kompensationsvorrichtung und an die Regelung. Darüber hinaus wird die Stellreserve, also das Vermögen gegen Störungen vorzugehen, vergrößert.

Bei einer weiteren vorteilhaften Ausgestaltung der Erfindung ist die Energiequelle als Spannungsquelle ausgebildet und in einer Reihenschaltung zu den Anschlussklemmen der elektrischen Maschine angeordnet. Bei der Reihenschaltung addieren sich die Spannung der Energieversorgung und der Kompensationsvorrichtung zu einer Gesamtspannung, die an den Klemmen der elektrischen Maschine anliegt. Durch ein Einbringen einer Spannung durch die Kompensationsvorrichtung kann einer Oberschwingung in der Spannung der Energieversorgung entgegengewirkt werden. Die entsprechende Oberschwingung, die in der Spannung der Energieversorgung enthalten ist und die Oberschwingung in der elektrischen Maschine bewirkt, beispielsweise aufgrund einer Schaltfrequenz eines speisenden Stromrichters, wird derart durch die Kompensationsvorrichtung kompensiert, dass diese Oberschwingung in Form einer Spannung mit entgegengesetztem Vorzeichen, d.h. mit einer Phasenverschiebung von 180°, durch die Kompensationsvorrichtung erzeugt wird. Diese erzeugte Spannung überlagert sich aufgrund der Reihenschaltung mit der Oberschwingung der Energieversorgung, so dass diese Oberschwingung an den Anschlussklemmen der elektrischen Maschine nicht mehr vorhanden ist. Die Einkopplung der Spannung der Kompensationsvorrichtung kann dabei beispielsweise direkt oder über einen Transformator erfolgen.

Bei einer weiteren vorteilhaften Ausgestaltung der Erfindung ist die Energiequelle als Stromquelle ausgebildet und in einer Parallelschaltung zu den Anschlussklemmen der elektrischen Maschine angeordnet. Bei der Parallelschaltung addieren sich die Ströme der Energieversorgung und der Kompensationsvorrichtung zu einem Gesamtstrom, der über die Anschlussklemmen in die elektrische Maschine fließt. Daher kann dieser Strom auch als Strom an den elektrischen Anschlussklemmen bezeichnet werden. Durch ein Einbringen eines Stroms durch die Kompensationsvorrichtung kann einer Oberschwingung in dem Strom der Energieversorgung entgegengewirkt werden. Die entsprechende Oberschwingung aus der Energieversorgung, die als Strom in die elektrische Maschine fließt, beispielsweise aufgrund einer Schaltfrequenz eines speisenden Stromrichters, wird derart durch die Kompensationsvorrichtung kompensiert, dass diese Oberschwingung in Form eines Stroms mit entgegengesetztem Vorzeichen, d.h. mit einer Phasenverschiebung von 180°, durch die Kompensationsvorrichtung erzeugt wird. Dieser erzeugte Strom überlagert sich aufgrund der Parallelschaltung mit der Oberschwingung der Energieversorgung, so dass diese Oberschwingung an den Anschlussklemmen der elektrischen Maschine nicht mehr vorhanden ist.

Bei einer weiteren vorteilhaften Ausgestaltung der Erfindung ist die Energiequelle über eine induktive Kopplung, insbesondere über einen Transformator, mit den Anschlussklemmen der elektrischen Maschine verbunden. Mit Hilfe der induktiven Kopplung können Ströme und Spannungen auf einfache Weise in die elektrische Maschine oder allgemein in den elektrischen Antrieb eingekoppelt werden. Über einen Transformator als induktives Koppelelement können die vorhandenen Ströme und Spannungen angepasst werden, so dass die Kompensationsvorrichtung in einem günstigen Arbeitspunkt betrieben werden kann. Auch ist eine gute Ausnutzung der Halbleiter in Hinblick auf Sperrspannung und Stromtragfähigkeit möglich. Des Weiteren werden durch die induktive Kopplung Erdströme zuverlässig vermieden, die den Antrieb in seiner Funktion stören können. Die Einkopplung über eine induktive Kopplung ermöglicht damit einen zuverlässigen Betrieb und effizienten Betrieb.

Bei einer weiteren vorteilhaften Ausgestaltung der Erfindung umfasst der elektrische Antrieb einen Stromrichter, wobei die Anschlussklemmen der elektrischen Maschine mit dem Stromrichter verbunden sind. Bei einer Vielzahl von Anwendungen wird die elektrische Maschine von einem Stromrichter gespeist. Mit Hilfe des Stromrichters kann die elektrische Maschine hinsichtlich Drehzahl und Moment geregelt oder gesteuert werden. Dies ermöglicht den breiten Einsatz solcher Antriebe in vielen Anwendungen. Der Stromrichter erzeugt allerdings auch Oberschwingungen, insbesondere Oberschwingungen in Strom und/oder Spannung des Motors, die zu Verlusten und Geräuschen führen können. Mit Hilfe der Kompensationsvorrichtung kann ein elektrischer Antrieb mit guter Steuerbarkeit und Regelbarkeit realisiert werden, der darüber hinaus eine hohe Dynamik aufweist. Der Nachteil der durch den Stromrichter erzeugten Oberschwingungen und den damit einhergehenden Verlusten und Geräuschen kann mit Hilfe der Kompensationsvorrichtung beseitigt werden. Somit lässt sich auf besonders einfache und kostengünstige Weise ein stromrichtergespeister, verlust- und geräuscharmer, elektrischer Antrieb realisiert werden.

Gerade wenn der elektrische Antrieb und damit der Stromrichter für den Betrieb mit einer hohen Leistung, insbesondere für eine Leistung größer 1 MW, ausgelegt ist, ist die Oberschwingung aufgrund geringer Reaktanzen hoch. Dies führt zu deutlichen Verlusten und wahrnehmbaren Geräuschen, die auf einfache Weise durch die Kompensationsvorrichtung beseitigt werden können. Der Sensor der Kompensationsvorrichtung ist in der Lage, auch bei großen Betriebsströmen kleine Amplituden und ihre Phasenlage hinreichend genau und zuverlässig zu erfassen.

Bei einer weiteren vorteilhaften Ausgestaltung der Erfindung wird eine Oberschwingung mit dem 25-fachen der Frequenz der Grundschwingung bestimmt und durch ein elektrisches Signal der Kompensationsvorrichtung verringert. Es hat sich gezeigt, dass eine derartige Frequenz als besonders störend wahrgenommen wird und somit eine Beseitigung dieser Geräusche besonders vorteilhaft ist. Zur Kompensation dieser Kraftwelle mit der räumlichen Ordnungszahl 0 und einer Kreisfrequenz 24ω₁ kann also z.B. eine zusätzliche Schwingung mit ω2=25ω₁ eingeprägt werden. Die Phasenlage muss dann so eingestellt werden, dass sich durch Gegenphasigkeit eine Auslöschung der Oberschwingung ergibt.

Bei einer weiteren vorteilhaften Ausgestaltung der Erfindung zur Steuerung oder Regelung eines elektrischen Antriebs mit einem Stromrichter wird die Oberschwingung im Bereich der Schaltfrequenz und/oder im Bereich eines Vielfachen der Schaltfrequenz des Stromrichters bestimmt. Der Bereich der Schaltfrequenz eines speisenden Stromrichters ist meist der signifikante Anteil der vorhandenen Oberschwingung, der Verluste und Geräusche erzeugt. Somit kann auf eine Suche des relevanten Frequenzbereichs verzichtet werden. Es werden mittels des Sensors nur Oberschwingungen mit Frequenzen im Bereich der Schaltfrequenz oder im Bereich eines Vielfachen der Schaltfrequenz bestimmt. Mit dem Bereich ist der Bereich definiert, der sich aus der Schaltfrequenz bzw. eines Vielfachen abzüglich der Grundfrequenz bis zur Schaltfrequenz bzw. eines Vielfachen plus Grundfrequenz ergibt. Auf diese Weise kann eine besonders einfache Ermittlung der Oberschwingung durchgeführt werden, da der zur analysierende Frequenzbereich entsprechend klein gewählt ist. Dies vereinfacht die Auswertung und die Bestimmung der zu kompensierenden Oberschwingung. Damit kann eine besonders rechenarme Kompensation auch mit einer einfachen Regelvorrichtung erzielt werden.

Im Folgenden wird die Erfindung anhand der in den Figuren dargestellten Ausführungsbeispiele näher beschrieben und erläutert. Es zeigen:

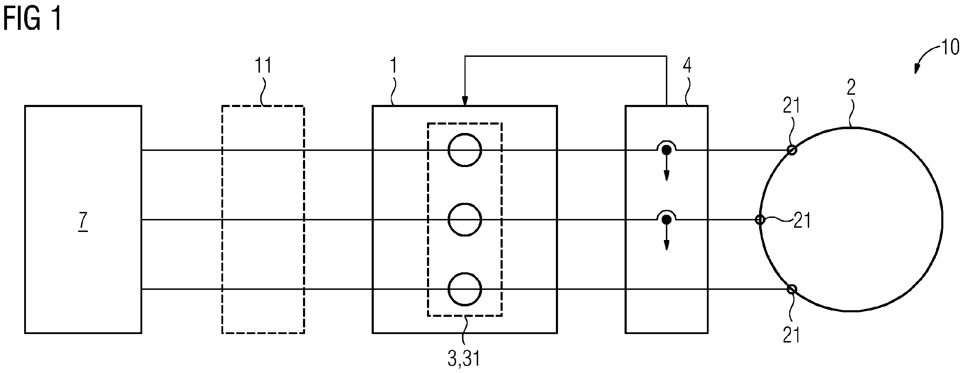

- FIG 1 bis FIG 3: Ausführungsbeispiele eines elektrischen Antriebs mit einer vorgeschlagenen Kompensationsvorrichtung

FIG 1 zeigt einen elektrischen Antrieb 10. Dieser weist eine elektrische Maschine 2 auf, die von einer Energieversorgung 7 mit elektrischer Energie versorgt wird. Zur Steuerung und/oder Regelung der elektrischen Maschine kann optional der elektrische Antrieb 10 einen Stromrichter 11 aufweisen. Zur Beseitigung von störenden Oberschwingungen an Klemmen 21 der elektrischen Maschine 2, die zu unerwünschten Geräuschen oder elektrischen Verlusten führen, dient ein Kompensationsvorrichtung 1. Dazu werden mit einem Sensor 4 die Oberschwingungen an den Anschlussklemmen 21 der elektrischen Maschine 2 ermittelt bzw. bestimmt. In Abhängigkeit von diesen Messwerten wird durch die Energiequelle 3 ein elektrisches Signal erzeugt, das mindestens einer Oberschwingung entgegenwirkt.

In diesem Ausführungsbeispiel wird die Oberschwingung anhand des Stroms mittels des Sensors 4 bestimmt. Dieser ist vorteilhafterweise als Stromsensor ausgebildet. Alternativ ist beispielsweise auch die Bestimmung der Oberschwingungen über die Spannung mit Hilfe eines Spannungswandlers zwischen den Phasen oder gegenüber einem Bezugspotential möglich. Die Messwerte des Sensors 4 werden an die Kompensationsvorrichtung 1 übertragen.

In diesem Ausführungsbeispiel ist die Energiequelle 3 als Spannungsquelle 31 ausgebildet. Diese ist in einer Reihenschaltung zu den Anschlussklemmen 21 der elektrischen Maschine 2 angeordnet, so dass sich die Spannung der Energieversorgung 7 und die Spannung der Kompensationsvorrichtung 1 addieren und an den Anschlussklemmen 21 der elektrischen Maschine 2 anliegen.

Der Stromrichter 11 kann zur Steuerung der elektrischen Maschine verwendet werden. Dieser kann die Drehzahl und/oder das Moment der elektrischen Maschine 2 steuern, regeln und/oder überwachen.

Die Anordnung des Sensors 4 zwischen der Kompensationsvorrichtung 1 und der elektrischen Maschine 2 ist besonders vorteilhaft, weil die Kompensation bzw. Reduktion der Oberschwingungen geregelt werden kann. Wird der Sensor 4 alternativ zwischen der Energieversorgung 7 und der Kompensationsvorrichtung 1 angeordnet kann die Kompensation bzw. Reduktion der Oberschwingungen gesteuert erfolgen. Darüber hinaus können auch die Messwerte eines Messwerterfassers für die Regelung der elektrischen Maschine 2 gleichzeitig als Sensor 4 für die Kompensationsvorrichtung 1 genutzt werden. Die Messwerte können dabei direkt von dem Messwerterfasser an die Kompensationsvorrichtung 1 übermittelt werden oder von einer Regelbaugruppe des Stromrichters 11 an die Kompensationsvorrichtung 1 übermittelt werden.

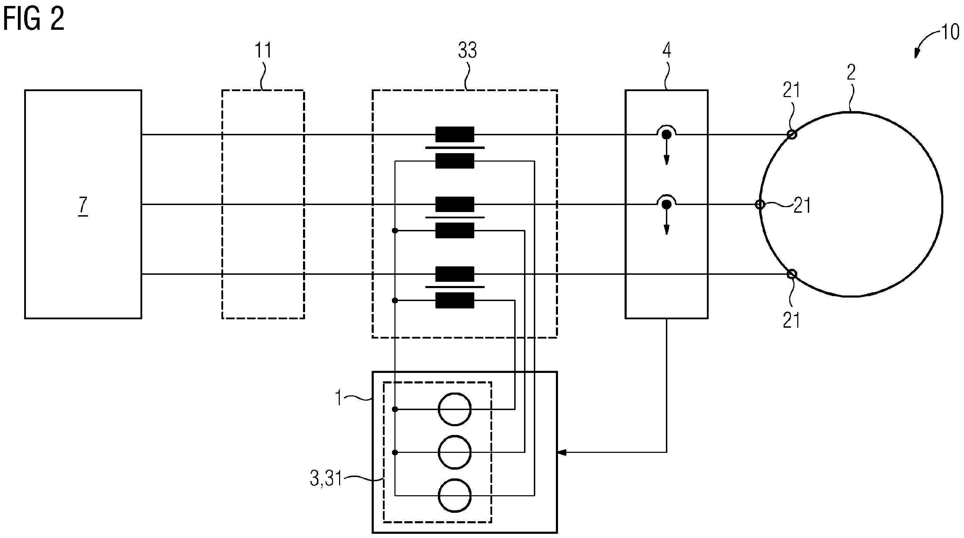

FIG 2 zeigt ein weiteres Ausführungsbeispiel eines vorgeschlagenen elektrischen Antriebs 10 mit der Kompensationsvorrichtung 1. Auch in diesem Ausführungsbeispiel ist die Energiequelle 3 der Kompensationsvorrichtung 1 als Spannungsquelle 31 ausgebildet und in einer Reihenschaltung zu den Anschlussklemmen 21 der elektrischen Maschine 2 angeordnet. Dabei erfolgt die Anbindung der Kompensationsvorrichtung 1 an die Verbindung zwischen Energieversorgung 7 und der elektrischen Maschine 2 über eine induktive Kopplung 33 mit Hilfe eines Transformators. Zur Vermeidung von Wiederholungen wird auf die Beschreibung zur FIG 1 sowie auf die dort eingeführten Bezugszeichen verwiesen. Insbesondere die Aussagen für die Anordnung des Sensors 4 und des Stromrichters 11 gelten auch für die Anordnung des Ausführungsbeispiels nach FIG 2.

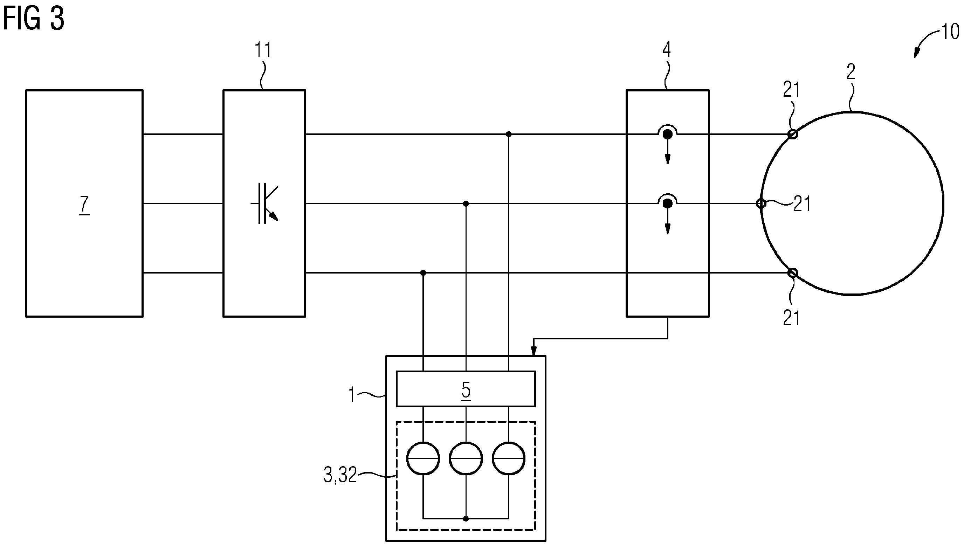

FIG 3 zeigt ein weiteres Ausführungsbeispiel eines vorgeschlagenen elektrischen Antriebs 10 mit der Kompensationsvorrichtung 1. In diesem Ausführungsbeispiel ist die Kompensationsvorrichtung 1 parallel zu den Anschlussklemmen 21 der elektrischen Maschine 2 und auch parallel zu den Energieversorgung 7 angeordnet. Dabei addieren sich die Ströme der Energieversorgung 7 bzw. des Stromrichters 11 mit den Strömen der Kompensationsvorrichtung zu einem Gesamtstrom, der durch die elektrische Maschine 2 fließt. Damit fließt dieser Strom auch durch die Anschlussklemmen 21 der elektrischen Maschine 2. Eine Oberschwingung im Strom von der Energieversorgung kann durch einen Strom der Kompensationsvorrichtung 1 mit gleicher Amplitude, gleicher Frequenz und einer Phasenverschiebung von 180° kompensiert werden. In diesem Ausführungsbeispiel weist die Kompensationsvorrichtung 1 ein Filter 5 auf. Dieses kann beispielsweise so ausgelegt sein, dass es nur den Frequenzbereich der zu kompensierenden Oberschwingung durchlässt und für alle anderen Frequenzen, wie beispielsweise die Grundfrequenz sperrt.

Des Weiteren ist der Stromrichter 11 in diesem Ausführungsbeispiel vorhanden. Alternativ kann auf diesen verzichtet werden, indem die elektrische Maschine 2 direkt mit der Energieversorgung 7 verbunden ist. Zur Vermeidung von Wiederholungen wird auf die Beschreibung zu den Figuren 1 und 2 sowie auf die dort eingeführten Bezugszeichen verwiesen. Insbesondere die Aussagen für die Anordnung des Sensors 4 und des Stromrichters 11 gelten auch für die Anordnung des Ausführungsbeispiels nach FIG 2.

Zusammenfassend betrifft die Erfindung eine Kompensationsvorrichtung 1 für eine elektrische Maschine 2. Zur Verbesserung eines elektrischen Antriebs wird vorgeschlagen, dass die Kompensationsvorrichtung 1 eine Energiequelle 3 aufweist, wobei die Energiequelle eingerichtet ist, in Abhängigkeit von Messwerten eines Sensors 4 zur Bestimmung von mindestens einer Oberschwingung ein elektrisches Signal, insbesondere eine Spannung oder einen Strom, zu erzeugen, das der Oberschwingung entgegenwirkt. Die Erfindung betrifft weiter einen elektrischen Antrieb 10, aufweisend eine derartige Kompensationsvorrichtung 1, eine elektrische Maschine 2 und einen Sensor zur Bestimmung von mindestens einer Oberschwingung an Anschlussklemmen 21 der elektrischen Maschine 2, wobei die Kompensationsvorrichtung 1 mit den Anschlussklemmen 21 der elektrischen Maschine 2 verbunden ist. Ferner betrifft die Erfindung ein Verfahren zur Steuerung oder Regelung einer derartigen Kompensationsvorrichtung 1 oder eines derartigen elektrischen Antriebs 10, wobei mindestens eine Oberschwingung an den Anschlussklemmen 21 der elektrischen Maschine 2 bestimmt wird, wobei mittels der Kompensationsvorrichtung 1 ein elektrisches Signal erzeugt wird, das der Oberschwingung an den Anschlussklemmen 21 der elektrischen Maschine 2 entgegenwirkt.

## Patentansprüche

1. Kompensationsvorrichtung (1) für eine elektrische Maschine (2), wobei die Kompensationsvorrichtung (1) eine Energiequelle (3) aufweist, wobei die Energiequelle eingerichtet ist, in Abhängigkeit von Messwerten eines Sensors (4) zur Bestimmung von mindestens einer Oberschwingung ein elektrisches Signal, insbesondere eine Spannung oder einen Strom, zu erzeugen, das der Oberschwingung entgegenwirkt.

2. Kompensationsvorrichtung (1) nach Anspruch 1, wobei die Kompensationsvorrichtung (1) ein Filter (5), insbesondere ein Bandpassfilter, aufweist.

3. Elektrischer Antrieb (10), aufweisend
- eine Kompensationsvorrichtung (1) nach einem der Ansprüche 1 oder 2,
- eine elektrische Maschine (2) und
- einen Sensor zur Bestimmung von mindestens einer Oberschwingung, insbesondere einer Oberschwingung des Stroms oder der Spannung, an Anschlussklemmen (21) der elektrischen Maschine (2),
wobei die Kompensationsvorrichtung (1) mit den Anschlussklemmen (21) der elektrischen Maschine (2) verbunden ist.

4. Elektrischer Antrieb (10) nach Anspruch 3, wobei die Energiequelle (3) als Spannungsquelle (31) ausgebildet ist und in einer Reihenschaltung zu den Anschlussklemmen (21) der elektrischen Maschine (2) angeordnet ist.

5. Elektrischer Antrieb (10) nach Anspruch 3, wobei die Energiequelle (3) als Stromquelle (32) ausgebildet ist und in einer Parallelschaltung zu den Anschlussklemmen (21) der elektrischen Maschine (2) angeordnet ist.

6. Elektrischer Antrieb (10) nach einem der Ansprüche 3 bis 5, wobei die Energiequelle (3) über eine induktive Kopplung (33), insbesondere über einen Transformator, mit den Anschlussklemmen (21) der elektrischen Maschine (2) verbunden ist.

7. Elektrischer Antrieb (10) nach einem der Ansprüche 3 bis 6, wobei der elektrische Antrieb (10) einen Stromrichter (11) umfasst, wobei die Anschlussklemmen (21) der elektrischen Maschine (2) mit dem Stromrichter (11) verbunden sind.

8. Verfahren zur Steuerung oder Regelung einer Kompensationsvorrichtung (1) nach einem der Ansprüche 1 oder 2 oder eines elektrischen Antriebs (10) nach einem der Ansprüche 3 bis 7, wobei mindestens eine Oberschwingung, insbesondere eine Oberschwingung des Stroms und/oder der Spannung, an den Anschlussklemmen (21) der elektrischen Maschine (2) bestimmt wird, wobei mittels der Kompensationsvorrichtung (1) ein elektrisches Signal, insbesondere eine Spannung oder ein Strom, erzeugt wird, das der Oberschwingung an den Anschlussklemmen (21) der elektrischen Maschine (2) entgegenwirkt.

9. Verfahren nach Anspruch 8, wobei eine Oberschwingung mit dem 25-fachen der Frequenz der Grundschwingung bestimmt wird und durch ein elektrisches Signal der Kompensationsvorrichtung (1) verringert wird.

10. Verfahren nach einem der Ansprüche 8 oder 9 zur Steuerung oder Regelung eines elektrischen Antriebs (10) nach Anspruch 7, wobei die Oberschwingung im Bereich der Schaltfrequenz und/oder im Bereich eines Vielfachen der Schaltfrequenz des Stromrichters (11) bestimmt wird.
